# EUROPÄISCHE PATENTSCHRIFT

(11) **EP 3 148 333 B1**
(45) Veröffentlichungstag und Bekanntmachung des Hinweises auf die Patenterteilung: **03.03.2021**
(21) Anmeldenummer: 15729088.3
(22) Anmeldetag: 22.05.2015
(51) Int. Cl.: A01N 33/10, C05F 11/10, A01N 25/12

(54) **VERWENDUNG EINES DÜNGEMITTELS, UMFASSEND DEN INHALTSSTOFF HORDENIN**
USE OF A FERTILIZER COMPRISING THE CONSTITUENT HORDENINE
UTILISATION D'UN ENGRAIS CONTENANT L'INGRÉDIENT HORDÉNINE

(30) Priorität: 26.05.2014 DE 102014107373
(43) Veröffentlichungstag der Anmeldung: 05.04.2017
(73) Patentinhaber: Maltaflor International GmbH, 56626 Andernach (DE)
(72) Erfinder: PROTZMANN, Mario, 56626 Andernach (DE)
(74) Vertreter: Kayser, Martin
(86) Internationale Anmeldenummer: PCT/EP2015/061408
(87) Internationale Veröffentlichungsnummer: WO 2015/181079

(56) Entgegenhaltungen:
- CA-A1- 2 192 430
- FR-A1- 2 979 188
- US-A- 149 243
- US-A1- 2004 035 162
- US-B1- 7 074 251

## Beschreibung

Die Erfindung betrifft ein Verfahren zur Düngung einer Pflanzengruppe von bereits gekeimten Pflanzen mit einem Hordenin enthaltenden Düngemittel. gemäß Anspruch 1. Ferner betrifft die Erfindung die Verwendung eines Hordenin enthaltenden Düngemittel zur Düngung von bereits gekeimten Pflanzen gemäß Anspruch 5.

Es sind zahlreiche verschiedenartige Düngemittel bekannt. Beispielsweise wird schon seit langem Malz zur Düngung verwendet, was beispielsweise in der US 149,243 A und der US 7,074,251 B1 beschrieben ist. Auch sind aus der CA 2 192 430 A1 und der FR 2 979 188 A1 Düngemittel bekannt, die mehr als 50 ppm Hordenin enthält.

Es ist heute zunehmend von Bedeutung, Düngemittel für Pflanzen zu entwickeln, die spezielle Eigenschaften besitzen und damit für besondere Einsatzbereiche bzw. Problemfelder geeignet sind. Beispielsweise kann es vorteilhaft sein, dass ein Düngemittel selektiv nur für Pflanzen wirksam ist, deren Wachstum verbessert werden soll, während gleichzeitig das Wachstum von anderen Pflanzen verhindert oder zumindest verringert werden soll. Dies ist beispielsweise bei der Düngung von Kulturpflanzen und dazwischen wachsendem, unerwünschten Unkraut auf einer Anbaufläche der Fall.

Aufgabe der Erfindung ist es, ein Verfahren für die Düngung von Pflanzen bereitzustellen. Das Verfahren soll auf möglichst einfache Weise eine selektive Düngung von Kulturpflanzen bei gleichzeitiger Hemmung des Wachstums von unterwünschten Pflanzen innerhalb einer Pflanzengruppe ermöglichen.

Erfindungsgemäß wird diese Aufgabe durch ein Verfahren gemäß dem unabhängigen Anspruch 1 gelöst. Vorteilhafte Weiterbildungen des Düngemittels ergeben sich aus den Unteransprüchen 2-4. Von der Erfindung umfasst ist ferner die Verwendung von Hordenin in einem Düngemittel gemäß Patentanspruch 5.

Das erfindungsgemäß verwendete Düngemittel für Pflanzen enthält somit Hordenin, wobei es in verschiedenen Formen verwendet werden kann. Beispielsweise kann es in Pulverform eingesetzt und aufgebracht werden. Es kann jedoch auch auf Wasserbasis hergestellt sein, wobei das Hordenin in dem Wasser gelöst ist. Dabei enthält es wenigstens 50ppm, vorzugsweise wenigstens 100ppm Hordenin.

Hordenin ist ein Alkaloid, das von vielen Pflanzen gebildet wird. Beispielsweise wird es von der Gerste gebildet (hordum vulgare), was der Substanz ihren Namen gab. Insbesondere wird es beim Keimvorgang von Samen gebildet. Bekannte Wirkungen von Hordenin auf Pflanzen lassen diesen Stoff als Zusatz zu Düngemitteln eigentlich ungeeignet erscheinen, denn Hordenin zeigt eine hemmende Wirkung auf das Wachstum anderer Pflanzen. Es wird daher vermutet, dass die Substanz zur Selbstverteidigung der produzierenden Pflanze dient. Insbesondere wird von der hemmenden Wirkung des Hordenins auf den Keimprozess von Samen ausgegangen.

In eigenen Versuchen der Anmelderin konnte diese Keimhemmung ebenfalls beobachtet werden. Als Versuchspflanze diente Kresse und Hordenin wurde zu unterschiedlichen Keimstadien appliziert. Bei anfänglicher Applikation von Hordenin trat zunächst die bekannte hemmende Wirkung auf. Zu einem späteren Applikationszeitpunkt wurde dagegen eine deutlich stimulierende Wirkung festgestellt. Diese positive Wirkung konnte sicher ab dem Zeitpunkt beobachtet werden, bei dem Triebblatt und Wurzel der keimenden Kresse voll entwickelt waren. Bei der für die Versuche verwendeten Kresse lag dies beispielsweise 8 Tage nach der Aussaat vor. Ab diesem Zeitpunkt zeigte sich insbesondere ein verbessertes Wurzelwachstum im Vergleich zur unbehandelten Variante.

Ein positiver Wachstumseffekt konnte bei einmaliger Anwendung bei einer Konzentration von wenigstens 50ppm, insbesondere von wenigstens 100 ppm Hordenin im Gießwasser erreicht werden. Dabei spielt es keine Rolle, ob das Hordenin aus synthetisch-chemischer Quelle oder aus pflanzlicher Herkunft stammt. Das Düngemittel kann somit Hordenin aus synthetischen oder natürlichen Quellen aufweisen.

Ferner kann das Düngemittel für Pflanzen eingesetzt werden, die generativ oder vegetativ vermehrt werden. Bei Testversuchen zur generativen Vermehrung hat sich herausgestellt, dass insbesondere generativ vermehrbare Pflanzen bereits gekeimt haben sollten, damit das Hordenin wachstumsfördernd wirken kann.

Bei Testversuchen wurde die Pflanzenentwicklung von Kresse anhand von Boniturnoten ermittelt, wobei 1 für eine geringe Pflanzenentwicklung und 9 für eine sehr gute Pflanzenentwicklung steht. Die Bewertung der Pflanzenentwicklung erfolgte 12 Tage nach der Aussaat, wobei die Hordenin-Düngung zu verschiedenen Applikationszeitpunkten erfolgte. Es wurde am 2., 4., 6., 8., 10. und 12. Tag gedüngt. Die resultierenden Boniturnoten zu diesen verschiedenen Applikationszeitpunkten und für verschiedene Hordenin-Konzentrationen sind in Tabelle 1 aufgeführt:

**Tabelle 1: Pflanzenentwicklung**

| Applikationszeitpunkt | 2. Tag | 4.Tag | 6.Tag | 8. Tag | 10. Tag | 12. Tag |
|---|---|---|---|---|---|---|
| Behandlung | | | | | | |
| Hordenin | 3 | 4 | 6 | 8 | 8 | 8 |
| 50 ppm | | | | | | |
| Hordenin | 1 | 4 | 6 | 9 | 9 | 9 |
| 100 ppm | | | | | | |
| Hordenin | 1 | 3 | 6 | 9 | 9 | 9 |
| 200 ppm | | | | | | |
| Kontrolle | 7 | 7 | 7 | 7 | 7 | 7 |
| 0 ppm | | | | | | |

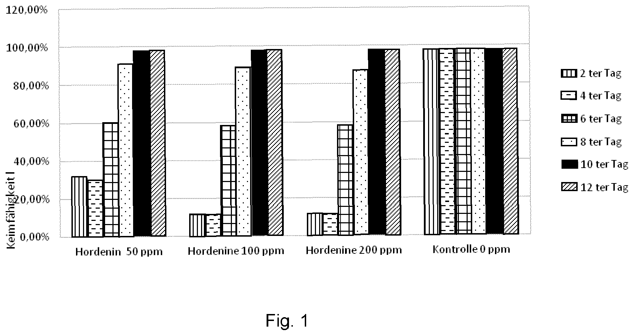

Ferner wurde bei den gleichen Versuchsbedingungen die Keimfähigkeit der Kressepflanzen ermittelt. Die Ergebnisse sind in der Fig. 1 dargestellt.

Bei einem Versuchszeitraum von 12 Tagen ist davon auszugehen, dass Effekte wie die externe Nährstoffzufuhr, etc. nur eine sehr untergeordnete Rolle spielen. Die jungen Pflanzen werden in diesem Zeitraum durch die Reservestoffe des Samens versorgt.

Demnach eignet sich die Zugabe von Hordenin zu Düngemitteln, die nicht während der Keimphase zu den zu düngenden Kulturpflanzen eingesetzt werden, sondern nach der Keimphase. Die bereits gekeimten Pflanzen reagieren dann mit einem verstärkten Wurzelwachstum. Gemäß dem erfindungsgemäßen Verfahren zur Düngung einer Pflanzengruppe wird der Pflanzengruppe somit ein Düngemittel mit Hordenin zugeführt. Das Düngemittel wird zugeführt, nachdem wenigstens ein Teil der Pflanzengruppe bereits gekeimt hat. Von der Erfindung umfasst ist ferner die Verwendung von Hordenin in einem Düngemittel zur Düngung von Pflanzen, wobei das Düngemittel insbesondere zur Düngung von bereits gekeimten Pflanzen verwendet wird und mindestens 50 ppm Hordenin enthält.

Eine gedüngte Pflanzengruppe enthält erfindungsgemäß bereits gekeimte und noch nicht gekeimte Pflanzen umfassen. So kann der bekannte keimhemmende Faktor des Hordenins auf unerwünschte, noch nicht gekeimte Pflanzen genutzt werden, denn das Wachstum der noch nicht gekeimten Pflanzen kann gehemmt werden. Zur Düngung von Kulturpflanzen wird somit die Keimung dieser Pflanzen abgewartet, um anschließend mit der Hordenin-Düngung zu beginnen. Die Keimung gleichzeitig auftretender Unkräuter innerhalb der Anbaufläche wird durch das Hordenin gehemmt, so dass weniger unterwünschte Pflanzen heranwachsen.

Beispielsweise wurden Versuche mit Kresse durchgeführt und ermittelt, wie viele andere Pflanzen auf der Test-Anbaufläche überlebten. Dabei wurde eine Aufwandmenge von mindestens 30g/m² eingesetzt, erneut am 2., 4., 6., 8., 10. und 12. Tag gedüngt und eine Auswertung der Anbaufläche nach 12 Tagen vorgenommen. Der Prozentsatz an überlebenden Pflanzen zu verschiedenen Applikationszeitpunkten und für verschiedene Hordenin-Konzentrationen ist in Tabelle 2 aufgeführt:

**Tabelle 2: Prozentsatz an überlebenden Pflanzen**

| Applikationszeitpunkt | 2. Tag | 4.Tag | 6.Tag | 8.Tag | 10.Tag | 12. Tag |
|---|---|---|---|---|---|---|
| Behandlung | | | | | | |
| Hordenin | 31,00% | 30,00% | 60,00% | 91,00% | 98,00% | 98,00% |
| 50 ppm | | | | | | |
| Hordenine | 12,00% | 11,00% | 58,00% | 89,00% | 98,00% | 98,00% |
| 100 ppm | | | | | | |
| Hordenine | 12,00% | 11,00% | 57,00% | 87,00% | 98,00% | 98,00% |
| 200 ppm | | | | | | |
| Kontrolle | 98,00% | 98,00% | 98,00% | 98,00% | 98,00% | 98,00% |
| 0 ppm | | | | | | |

## Patentansprüche

1. Verfahren zur Düngung einer Pflanzengruppe,
**dadurch gekennzeichnet, dass** die Pflanzengruppe Kulturpflanzen und Unkraut umfasst und ein Düngemittel für bereits gekeimte Kulturpflanzen mit wenigstens 50 ppm Hordenin zugeführt wird, nachdem die Kulturpflanzen bereits gekeimt und das Unkraut noch nicht gekeimt hat.

2. Verfahren nach Anspruch 1,
**dadurch gekennzeichnet, dass** das Düngemittel der Pflanzengruppe frühestens 8 Tage nach der Aussaat zugeführt wird.

3. Verfahren nach Anspruch 1 oder Anspruch 2,
**dadurch gekennzeichnet, dass** das Düngemittel Hordenin in Pulverform enthält.

4. Verfahren nach oder einem der Ansprüche 1 bis 3,
**dadurch gekennzeichnet, dass** das Düngemittel wenigstens 100 ppm Hordenin enthält.

5. Verwendung von Hordenin in einem Düngemittel zur Düngung einer Pflanzengruppe aus Kulturpflanzen und Unkraut, wobei ein Düngemittel für bereits gekeimte Kulturpflanzen mit wenigstens 50 ppm Hordenin zugeführt wird, nachdem die Kulturpflanzen bereits gekeimt und das Unkraut noch nicht gekeimt hat.

6. Verwendung von Hordenin in einem Düngemittel nach Anspruch 5,
**dadurch gekennzeichnet, dass** das Düngemittel Hordenin in Pulverform enthält.

7. Verwendung von Hordenin in einem Düngemittel nach Anspruch 6,
**dadurch gekennzeichnet, dass** das Düngemittel auf Wasserbasis hergestellt ist.

8. Verwendung von Hordenin in einem Düngemittel nach Anspruch 6 oder Anspruch 7, **dadurch gekennzeichnet, dass** das Düngemittel wenigstens 100 ppm Hordenin enthält.

## Claims

1. A method for fertilising a plant group,
**characterised in that** the plant group comprises crop plants and weeds, and a fertiliser for plants which have already started to shoot containing at least 50 ppm hordenine is supplied once the crop plants have already started to shoot but the weeds have not yet started to shoot.

2. The method according to claim 1,
**characterised in that** the fertiliser is supplied to the plant group at the earliest 8 days after sowing.

3. The method according to claim 1 or 2,
**characterised in that** the fertiliser contains hordenine in powder form.

4. The method according to one of claims 1 to 3,
**characterised in that** the fertiliser contains at least 100 ppm of hordenine.

5. Use of hordenine in a fertiliser for fertilising a plant group of crop plants and weeds, wherein a fertiliser for crop plants that have already started to shoot containing at least 50 ppm hordenine is suppled once the crop plants have already started to shoot but the weeds have not yet started to shoot.

6. The use of hordenine in a fertiliser according to claim 5,
**characterised in that** the fertiliser contains hordenine in powder form.

7. The use of hordenine in a fertiliser according to claim 6,
**characterised in that** the fertiliser is water-based.

8. The use of hordenine in a fertiliser according to claim 6 or claim 7,
**characterised in that** the fertiliser contains at least 100 ppm hordenine.

## Revendications

1. Procédé, destiné à fertiliser un groupe végétal,
**caractérisé en ce que** le groupe végétal comprend des cultures arables et des adventices et **en ce qu'**un fertilisant pour des cultures arables déjà germées avec au moins 50 ppm d'hordénine est alimenté, une fois que les cultures arables ont déjà germé et que les adventices n'ont pas encore germé.

2. Procédé selon la revendication 1,
**caractérisé en ce que** le fertilisant du groupe végétal est alimenté au plus tôt 8 jours après les semis.

3. Procédé selon la revendication 1 ou la revendication 2,
**caractérisé en ce que** le fertilisant contient l'hordénine sous forme pulvérulente.

4. Procédé selon l'une quelconque des revendications 1 à 3,
**caractérisé en ce que** le fertilisant contient au moins 100 ppm d'hordénine.

5. Utilisation de l'hordénine dans un fertilisant destiné à fertiliser un groupe végétal comprenant des cultures arables et des adventices, un fertilisant pour des cultures arables déjà germées avec au moins 50 ppm d'hordénine étant alimenté une fois que les cultures arables ont déjà germé et que les adventices n'ont pas encore germé.

6. Utilisation de l'hordénine dans un fertilisant selon la revendication 5,
**caractérisé en ce que** le fertilisant contient l'hordénine sous forme pulvérulente.

7. Utilisation de l'hordénine dans un fertilisant selon la revendication 6,
**caractérisé en ce que** le fertilisant est produit sur base aqueuse.

8. Utilisation de l'hordénine dans un fertilisant selon la revendication 6 ou la revendication 7,
**caractérisé en ce que** le fertilisant contient au moins 100 ppm d'hordénine.
